Europäisches Patentamt

European Patent Office

Office européen des brevets

(11) Publication number: 0 403 440
A2

# EUROPEAN PATENT APPLICATION

(21) Application number: 90830128.6

(51) Int. Cl.⁵: **H02G 3/04, H02G 3/06**

(22) Date of filing: 29.03.90

(30) Priority: 14.06.89 IT 2123089 U

(43) Date of publication of application:
19.12.90 Bulletin 90/51

(84) Designated Contracting States:
AT BE CH DE ES FR GB LI SE

(71) Applicant: **CANALPLAST S.r.l.**
**Viale Lombardia, 82**
**I-20051 Limbiate (Milano)(IT)**

(72) Inventor: **Villi, Pier Giorgio, Canalpast S.r.l.**
**Viale Lombardia, 82**
**I-20051 Limbiate (Milano)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Raceway for holding electrical cables and the like.**

(57) A raceway for electrical cables comprises an elongated U-shaped cross-section holding body and a closing cover therefor,which are respectively provided,at longitudinal end portions thereof,with female coupling seatings and male plug-in coupling elements for coupling and aligning a plurality of adjoining holding bodies.

Fig.1

EP 0 403 440 A2

## BACKGROUND OF THE INVENTION

The present invention relates to a raceway for holding electrical cables in general.

As is known raceways used for holding electrical cables are conventionally formed by section members which have a U-shaped cross section and a closing cover which is coupled to the free leg of the raceway body.

The section members used for forming these raceways are generally made of a plastic material such as polyvinyl chloride,polyethylene and the like and are made by extruding machines.

The raceways must be arranged one adjoining the other and at present there arc not provided means for holding these raceways at a proper axially aligned position.

Moreover,known raceways are usually made in bar form,with a conventional length of 2 metres,which is a standardized length for commercially available raceways.

This is a source of a lot of drawbacks,the most important of which is that it is rather difficult to properly align the raceways.Moreover the use of 2m long raceways involves some problems both in the assembling operation,since the raceways must be frequently cut,and during the shipment thereof,since these raceways can be handled with great difficulties. ·

## SUMMARY OF THE INVENTION

Accordingly,the aim of the present invention is to overcome the above mentioned drawbacks,by providing a raceway for holding electrical cables or wires in general,which is adapted to be properly aligned with like raceways in a very simple and quick way.

Within the scope of the above mentioned aim, a main object of the present invention is to provide such a raceway which can be made with a reduced length so as to facilitate the handling and installation of said raceway.

Another object of the present invention is to provide such a raceway which is very reliable in operation

Yet another object of the present invention is to provide such a raceway which can be easily made starting from easily available elements and materials and which,furthermore,is very competitive from a mere economic standpoint.

According to one aspect of the present invention,the above mentioned aim and objects,as well as yet other objects,which will become more apparent hereinafter,are achieved by a raceway,for holding electrical cables in general,comprising an elongated U-shaped cross-section holding body,and a cover member for covering said holding body,characterized in that said holding body and cover are provided,at longitudinal end portions thereof,with respectively female seatings and male plug-in members for coupling and aligning a plurality of said holding bodies and covers,arranged one after the other.

## BRIEF DESCRIPTION OF THE DRAWINGS

Further characteristics and advantages of the invention will become more apparent from the following detailed description of a preferred embodiment thereof, which is illustrated,by way of an indicative but not limitative example,in the figures of the accompanying drawings,where:

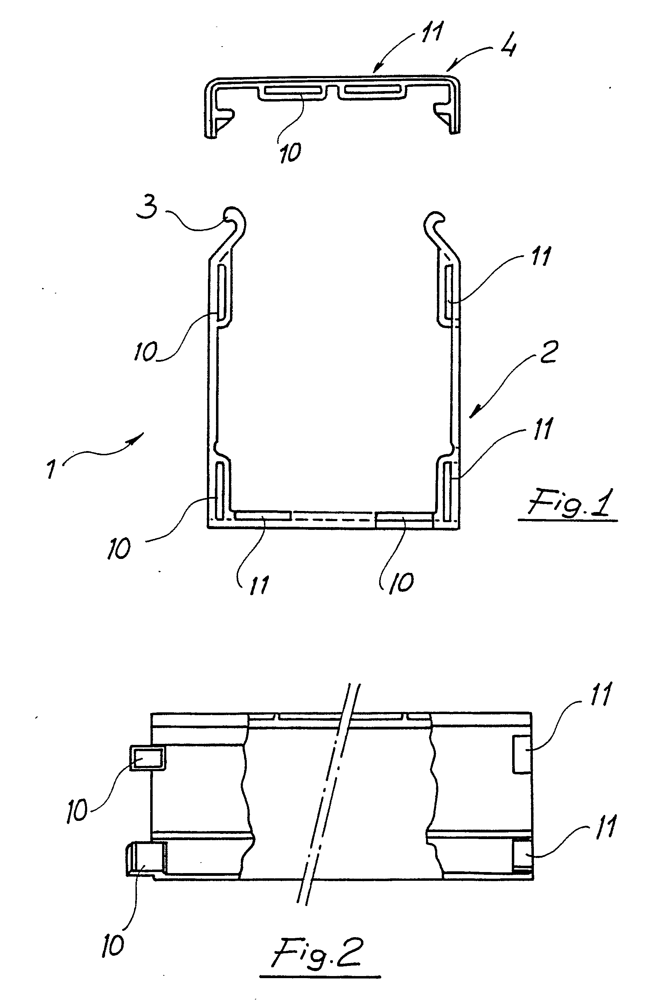

FIGURE 1 is a schematic perspective exploded view of a raceway according to the present invention;

FIGURE 2 is a partially broken away view showing a holding body,as seen from a side thereof;

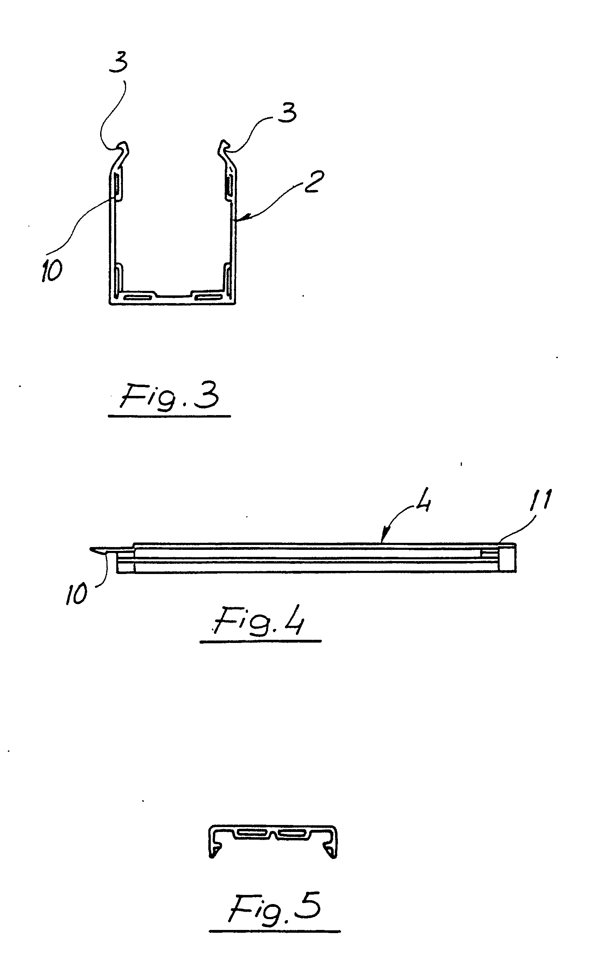

FIGURE 3 illustrates the holding body seen from one end thereof;

FIGURE 4 is a side view of the cover; and

FIGURE 5 shows the cover seen from one end thereof.

## DESCRIPTION OF THE PREFERRED EMBODIMENT

With reference to the figures of the accompanying drawings,the raceway for holding electrical cables in general,according to the present invention,which is indicated overally at the reference number 1,comprises a holding body 2,of elongated shape,which,advantageously, has a U-shaped cross-section and defines,at the free ends of its arms or legs,hook members 3 for snap engaging a closure cover indicated overally at the reference number 4.

More specifically, and this represents a main feature of the present invention,the holding body is made so as to define,at a longitudinal end portion thereof,male plug-in elements 10 and,at the other longitudinal end portion thereof,female seatings 11,which are symmetrically arranged so as to provide a plug-in type of coupling in order to align several adjoining-holding bodies.

The mentioned holding body is advantageously formed by injection molding,with a reduced length, and is provided with the male and female coupling elements which provide a perfect aligning.

The holding body can moreover be provided with slots through its side walls or base,which provide the female coupling seatings,or it can have a solid side wall and a slotted base,or it can have solid side walls and base.

The raceway can further comprise inner supporting means for supporting optional separating elements and fittings,so as to properly separate electrical cables held herein.

Likewise,the cover 4 is provided,at its longitudinal end portions,with respectively a male plug-in element 10 and a female seating 11,which are analogous to those provided on the holding body.

With the disclosed arrangement,it is accordingly possible to provide raceways with holding bodies of reduced longitudinal extension,with the advantage of quickly and simply aligning several holding bodies,so as to provide the racewav size required for the provided installation.

Another main aspect of the invention is that, since the holding body and cover are made by injection molding,it is possible to make them with all of the desired inner patterns.

While the invention has been disclosed and illustrated with reference to a preferred embodiment thereof,it should be apparent that the disclosed embodiment is susceptible to several modifications and variations all of which will come within the spirit and scope of the appended claims.

## Claims

1- A raceway for holding electrical cables and the like,comprising an elongated U-shaped cross-section holding body and a cover on said holding body, characterized in that said holding body and cover are respectively provided,at longitudinal end portions thereof,with female coupling seatings and male plug-in coupling elements for coupling and aligning a plurality of adjoining said holding bodies and covers.

2- A raceway according to claim 1,characterized in that said female coupling seatings and male plug-in coupling elements are symmetrically arranged at said longitudinal end portions so as to mutually connect a plurality of aligned said holding bodies,

3- A raceway according to claim 1,characterized in that said holding body and cover are made by injection molding.

4- A racewav according to claim 1,characterized in that said holding body and cover are made with reduced longitudinal size.

_Fig.1_

_Fig.2_

Fig.3

Fig.4

Fig.5